# EUROPEAN PATENT SPECIFICATION

(11) **EP 4 272 994 B1**
(45) Date of publication and mention of the grant of the patent: **15.10.2025**
(21) Application number: 22171083.3
(22) Date of filing: 02.05.2022
(51) Int. Cl.: B60L 53/302, B60L 53/30

(54) **ELECTRICAL CONNECTOR FOR VEHICLE CHARGING INLET**
ELEKTRISCHER VERBINDER FÜR FAHRZEUGLADEEINGANG
CONNECTEUR ÉLECTRIQUE POUR ENTRÉE DE CHARGE DE VÉHICULE

(43) Date of publication of application: 08.11.2023
(73) Proprietor: Aptiv Technologies AG, 8200 Schaffhausen (CH)
(72) Inventor: ZIEMBA, Robert, 30-384 Kraków (PL); MLECZKO, Marek, 30-868 Kraków (PL); PIESZKA-LYSON, Monika, 30-394 Kraków (PL)
(74) Representative: INNOV-GROUP

(56) References cited:
- EP-A1- 3 644 456
- EP-A1- 3 793 038
- US-A1- 2020 067 237
- US-A1- 2020 313 328
- US-A1- 2021 063 097

## Description

### TECHNICAL FIELD

The present disclosure relates to an electrical connector for connection to a mating electrical connector. Such an electrical connector can be part of an onboard charging inlet in a battery-powered electric vehicle (BEV) or plug-in hybrid electric vehicle (PHEV).

### BACKGROUND

A battery-powered electric vehicle (BEV), or a plug-in hybrid electric vehicle (PHEV), is equipped with a charging inlet. For charging the battery, the vehicle charging inlet can be connected to a grid socket through a charging cable having, on one end, a power plug that is plugged to the grid socket, and, on the other end, a vehicle connector that fits the onboard charging inlet. A high charging current flows through the charging equipment, which results in a high thermal power dissipation. For safety reasons, it is required to monitor the temperature, for example in the onboard charging inlet and/or in the vehicle connector, to detect any overheating. In case an important rise of temperature is detected, the charging current can be reduced or switched off.

WO 2020/039344 A1 discloses an electrical connector including a housing provided with channels for contact terminals, and a temperature sensor assembly for monitoring the temperature of the terminals. The temperature sensor assembly includes a sealing pad having holes for receiving the contact terminals and a thermal shunt. The thermal shunt is received in a shunt bushing of the sealing pad. The sealing pad is thermally conductive, and is thermally coupled to the contact terminals and to the thermal shunt. The terminal shunt is in contact with a thermal sensor. The thermal sensor monitors the temperature of the contact terminals via a thermal path defined by the sealing pad and the thermal shunt. The thermal shunt is a solid body, separate and discrete from the sealing pad. It is manufactured separately from a highly thermally conductive material such as an aluminum oxide material, aluminum nitride, mullite, a thermally conductive plastic, a metal material (e.g., copper or aluminum), or a ceramic material. The sealing pad is manufactured from an elastomer material, such as a silicone rubber.

The sealing pad disclosed in WO 2020/039344 A1 forms part of the thermal path between the terminals and the temperature sensor. It has two functions: a sealing function to prevent water from entering a rear chamber of the electrical connector from the front side, and a thermal conductor function to flow the heat from the terminals to the temperature sensor. The silicone rubber is known to provide a good sealing function. However, silicone is a poor thermal conductor. To improve its thermal conductivity, additional ingredients need to be added to the silicone. As a result, the silicone material may become more brittle, and the sealing pad is likely to be damaged during the assembling process. The silicon-based material is too brittle and may cause sealing lamellas breakage. EP 3 644 456 A1 discloses electrical connector comprising: at least one contact terminal; a sealing contact terminal positioning element with at least one hole for receiving the at least one contact terminal; and at least one thermal sensor to monitor the temperature of the at least one contact terminal according to the state of the art.

Therefore, there is a need to improve the situation. In particular, there is a need to avoid any damage during the manufacture of the electrical connector.

### SUMMARY

The present disclosure concerns an electrical connector comprising at least one contact terminal;
a sealing pad with at least one hole for receiving the at least one contact terminal;
at least one thermal sensor to monitor the temperature of the at least one contact terminal;
characterized in that the electrical connector further comprises a thermal conductive pad, having a higher thermal conductivity than the sealing pad and coupled to said sealing pad adjacent to the at least one hole,
wherein said thermal conductive pad includes at least one first thermal contact surface in direct engagement with the at least one contact terminal, and a second thermal contact surface in direct engagement with the at least one thermal sensor, to transfer heat from the at least one contact terminal to the at least one thermal sensor.

The thermal conductive pad and the sealing pad are two distinct elements or bodies. The sealing pad has a function of sealing, while the thermal conductive pad has a function of thermal bridge between the terminal(s) and the thermal sensor(s). The sealing pad does not need to have any thermal function for heat transfer. Therefore, it can be manufactured from a standard seal material, such as a standard silicone rubber, and be robust against breakage during the manufacture of the electrical connector.

In an embodiment, the thermal conductive pad is compressed between the sealing pad and a printed circuit board on which the at least one thermal sensor is mounted, a force of compression causing the at least one first thermal contact surface to press against the at least one contact terminal and the second thermal contact surface to deform on the thermal sensor covering said thermal sensor.

Thanks to the compression, each terminal is stably connected to a respective first thermal contact surface of the thermal conductive pad, and the second thermal contact surface deforms on the thermal sensor and covers it. The thermal sensor is immersed into the thermal conductive pad.

In WO 2020/039344 A1, the thermal path between the contact terminals and the thermal sensor includes a solid body to solid body connection between the temperature sensor and the thermal shunt. The thermal shunt only touches a top surface of the thermal sensor. As a result, the thermal contact between the thermal sensor and the shunt is limited. Furthermore, there may be a risk to damage the thermal sensor by pressing the solid thermal shunt against its top surface. As the thermal shunt is a rigid body (e.g. metal or ceramic), it has its own mass that can vibrate during car driving. This may cause micro cracks of the sensor's solder joints to the printed circuit board in the long run. In the present disclosure, the thermal contact between the thermal sensor and the thermal conductive pad is improved and the risk of damage of the thermal sensor is reduced.

In an embodiment, the thermal conductive pad is designed to slightly protrude into a passage of the at least one contact terminal received in the at least one hole of the sealing pad.

The thermal conductive pad is designed so that, before insertion of the terminal(s), a part of the thermal conductive pad including the first thermal contact surface(s) is sticking to, or protrudes into, the respective passages of the terminals. In this way, when the terminal(s) is/are inserted into the respective hole(s) of the sealing pad, the sticking or protruding part is pushed, moved, by the terminal(s) to ensure a stable connection between the terminal(s) and the thermal conductive pad. This allows to reduce the contact resistance between the terminal(s) and the thermal conductive pad.

Advantageously, the sealing pad has first positioning elements cooperating with second positioning elements of the thermal conductive pad to position the thermal conductive pad on the sealing pad.

For example, the first positioning elements and the second positioning elements include M protruding elements and M respective holes arranged to receive the M protruding elements.

In an embodiment, the thermal conductive pad has at least one beveled surface arranged between the at least one first thermal contact surface and an adjacent surface extending in a plane perpendicular to the first thermal contact surface, to avoid damage of the thermal conductive pad when the at least one contact terminal is inserted through the at least one hole of the sealing pad.

The beveled or chamfer surface allows to facilitate the insertion of the terminal(s) during manufacture, without damaging the thermal conductive pad.

In a first embodiment, the electrical connector may include two contact terminals and one thermal conductive pad having two first thermal contact surfaces in direct engagement with the two contact terminals, respectively.

In a second embodiment, the electrical connector further includes a third contact terminal and a ground terminal and another thermal conductive pad having two first thermal contact surfaces in direct engagement with the third contact terminal and the ground terminal, respectively.

The electrical connector may comprise a housing having a front part and a rear part, wherein
the at least one contact terminal is coupled to the housing and has, at one end, a contact pin disposed at the front of the housing, and, at the other end, a cable connector, disposed at the rear of the housing;
the sealing pad, the at least one thermal conductive pad and the at least one thermal sensor are received in the housing, at the rear;
the sealing pad being arranged to prevent water from entering the rear part of the housing from the front part of the housing.

The electrical connector may further include a retainer for a printed circuit board on which the at least one thermal sensor is mounted, that is coupled to the housing at the rear.

In an embodiment, the thermal conductive pad may be compressed between, on one side, the sealing pad and, on the other side, the printed circuit board and the printed circuit board retainer, and
the thermal conductive pad has a rear face including the second thermal contact surface to which the printed circuit board applies a compression force and a recess surface to which the printed circuit board retainer applies another compression force.

The present disclosure also concerns:
- a charging inlet device for a vehicle, including the electrical connector previously defined;
- a vehicle including an electric battery and a charging inlet device as above defined to charge the electric battery.

The present disclosure further concerns a method of manufacturing an electrical connector according to claim 14.

An embodiment of the method is defined in claim 15.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a schematic view of a vehicle with a charging inlet connected to a power source through a charging cable.
Figure 2 shows an exploded view of an electrical connector, according to an embodiment.
Figure 3 shows a perspective view of a sealing pad coupled to a thermal conductive pad, according to a first embodiment.
Figure 4 shows a rear view of the assembly of figure 3 with terminals introduced in holes provided in the sealing pad.
Figure 5A shows a perspective view of a thermal conductive pad, according to the first embodiment.
Figure 5B shows a rear view of the thermal conductive pad, according to the first embodiment.
Figure 5C shows a front view of the thermal conductive pad, according to the first embodiment.
Figure 6 shows a perspective view of the sealing pad, according to the first embodiment.
Figure 7 shows a perspective view of a sealing pad coupled to a thermal conductive pad, according to a second embodiment.
Figure 8 shows a rear view of the assembly of figure 6 with terminals introduced in holes provided in the sealing pad.

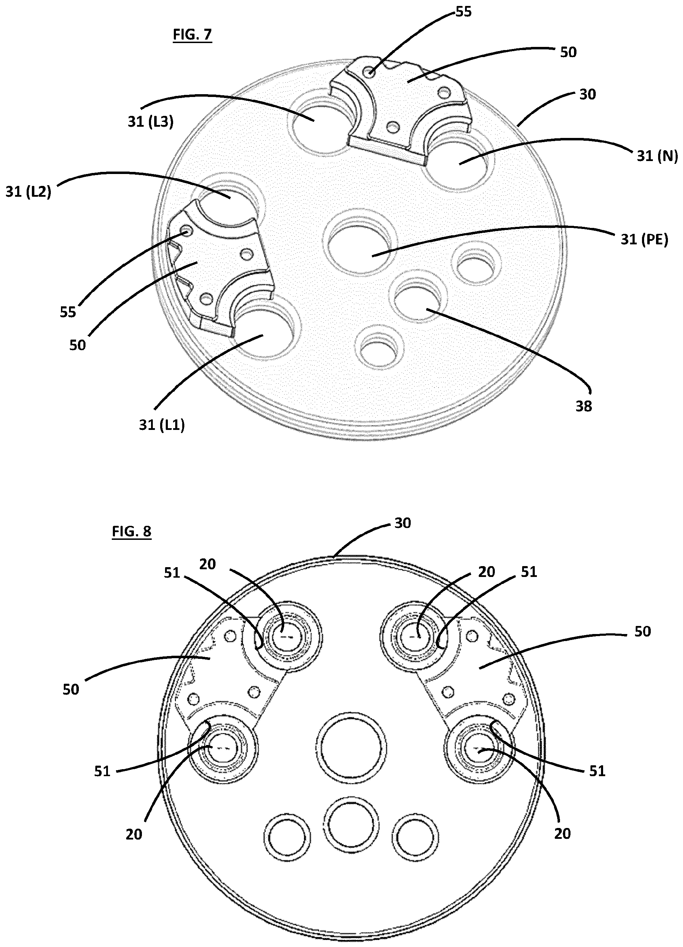

Figures 7 to 11 illustrate a process of assembling the electrical connector, according to the first embodiment.

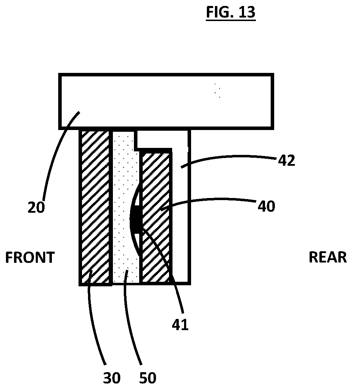

Figure 13 illustrate schematically the thermal conductive pad compressed between the sealing pad and a printed circuit board with a thermal sensor mounted on it, according to the first embodiment.

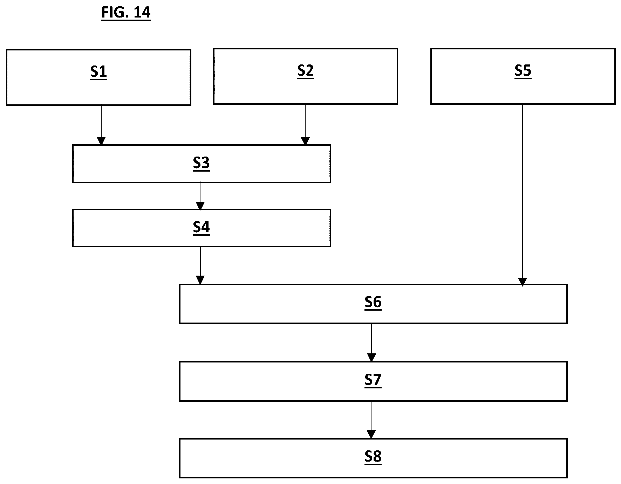

Figure 14 is a flowchart of the method of manufacturing the electrical connector, according to the first embodiment.

### DETAILED DESCRIPTION

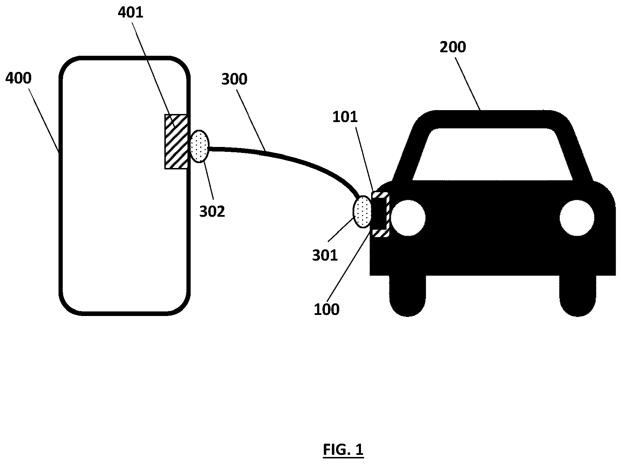

The present disclosure concerns an electrical connector 100. The electrical connector 100 may be included in a charging inlet device of a vehicle 200, for example a battery-powered electric vehicle (BEV), or a plug-in hybrid electric vehicle (PHEV), as shown in figure 1.

The charging inlet device may include the electrical connector 100 and means for mounting the electrical connector 100 to the vehicle. The electrical connector 100 is configured to mate a charging connector 301 of a charging cable 300 used to connect the onboard charging inlet device to a power source 400 for charging, for example to a grid socket. The charging cable 300 may be connected to a socket outlet 401 of the power source 400 via a plug 302, as shown in figure 1.

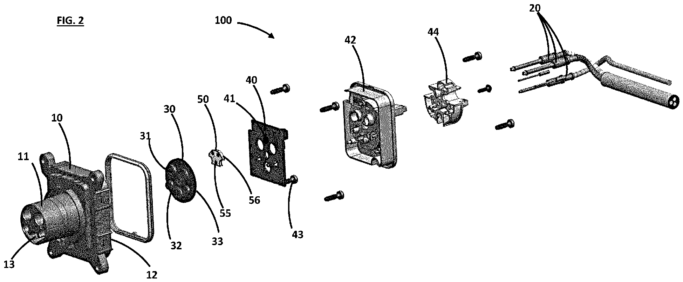

The electrical connector 100 has one or more contact terminals 20, or pins, coupled to, or assembled with, a main housing 10, as shown in figure 2.

In a first embodiment illustrated in figure 2, the electrical connector 100 has three contact terminals 20. For example, the electrical connector 100 is a Type 1 connector or a CCS combo 1 connector based on the standard CCS (Combined Charging System), also known as a CCS1 connector or inlet.

An electrical connector of Type 1 or CCS1 can be a 1-phase (AC Level 1) or 2-phase (AC Level 2) connector depending on the charging infrastructure.

In the first embodiment, the connector 100 is of Type 1 or CCS1 and has three contact terminals 20. It may be either a 1-phase connector or a 2-phase connector. In case of a 1-phase connector, the connector 100 includes the following contacts: L1 (phase), N (neutral), and PE (ground). In case of a 2-phase connector, the connector 100 includes the following contacts: L1 (phase), L2 (phase), and PE (ground). The terminals for which temperature may be checked are:
- for the 1-phase connector (AC Level 1): terminals L1 and N
- for the 2-phase connector (AC Level 2): terminals L1 and L2

As illustrated in figure 2, the main housing 10 extends between a front and a rear. It has a front part 11, a rear part 12 and terminal paths, or channels, 13 extending between the front and the rear with the terminals 20 in the terminal paths. The front part 11 is open towards the front of the main housing 10. For example, the front part 11 has a tower open towards the front of the main housing 10, receiving the front-end portions of the terminals 20. The rear part 12 may include a rear chamber.

Each terminal 20 has a contact pin at a front end, arranged in the front part 11 of the housing 10, and, at a rear end, a cable connector arranged at the rear of the main housing 10 and connected to a cable. In the first embodiment, the terminals 20 L1 and L2 (for a 2-phase connector) - or L1 and N (for a 1-phase connector) - are connected to a power battery via on-board charger to be charged and the ground terminal 20 is connected to the vehicle chassis, through respective cables. The terminals 20 are parallel to each other along a longitudinal axis.

The electrical connector 100 also includes a seal, or sealing pad, 30 for preventing water, and/or dust, from entering the rear part, or rear chamber, 12 of the main housing 10 from the front part, or front tower, 11 of the main housing 10, as illustrated in figure 2.

The sealing pad 30 may be in one single piece. For example, the sealing pad 30 may be a disk-shaped body. However, it could have any other shape.

The sealing pad 30 has a front face 32 and a rear face 33, respectively facing the front and the rear of the main housing 10.

The sealing pad 30 has also terminal holes 31 for receiving the terminals 20. The number of terminal holes 31 correspond to the number of contact terminals 20. In the first embodiment illustrated in figures 1-2, the sealing pad 30 has three holes for receiving the three contact terminals 30. The sealing pad 30 may extend in a plane orthogonal to the longitudinal axis of the terminals 20.

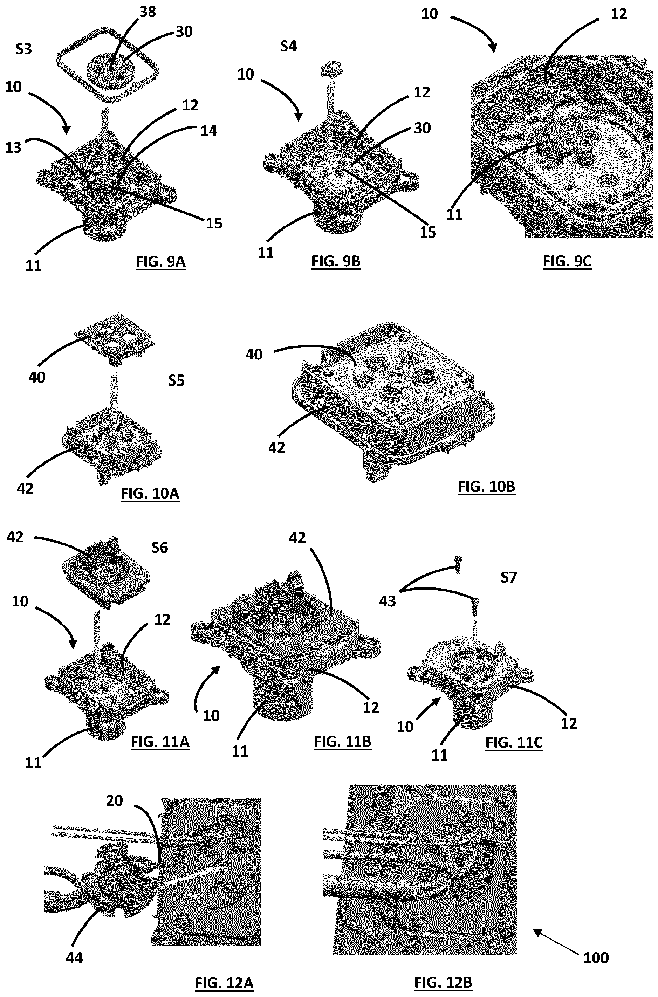

The sealing pad 30 is coupled to, or assembled with, the main housing 10. It is sealed to the main housing 10. For example, it may be received in a sealing pad housing 14 provided in the rear chamber 12 of the main housing 10, represented in figure 9A, and have an outer peripheral surface in direct engagement with an inner wall of the sealing pad housing 14, for example by means of compressible ribs provided on the sealing pad 30.

The sealing pad 30 is electrically insulative. It may be made of a soft and/or elastic material to ensure the sealing function. The sealing pad 30 may be manufactured from a silicone material, such as a silicone rubber. For example, the sealing pad is manufactured by processing a Liquid Silicone Rubber (LSR), that is a liquid silicone material, through an injection molding process. High Temperature Vulcanized Silicone Rubber (HTV) may also be used for the sealing pad 30. The inner surface of each hole 31 receiving a contact terminal 20 may have compressible ribs for sealing to the terminals 20.

The electrical connector 100 further includes a temperature monitoring system for monitoring the temperature of the contact terminals 20. A charging current may be controlled depending on the temperature of the contact terminals 20. In case that an important rise of temperature is detected, the charging current may be reduced or even switched off.

The temperature monitoring system includes at least one thermal sensor 41 and at least one thermal conductive pad 50. The one or more thermal sensors 41 may be mounted on a printed circuit board 40.

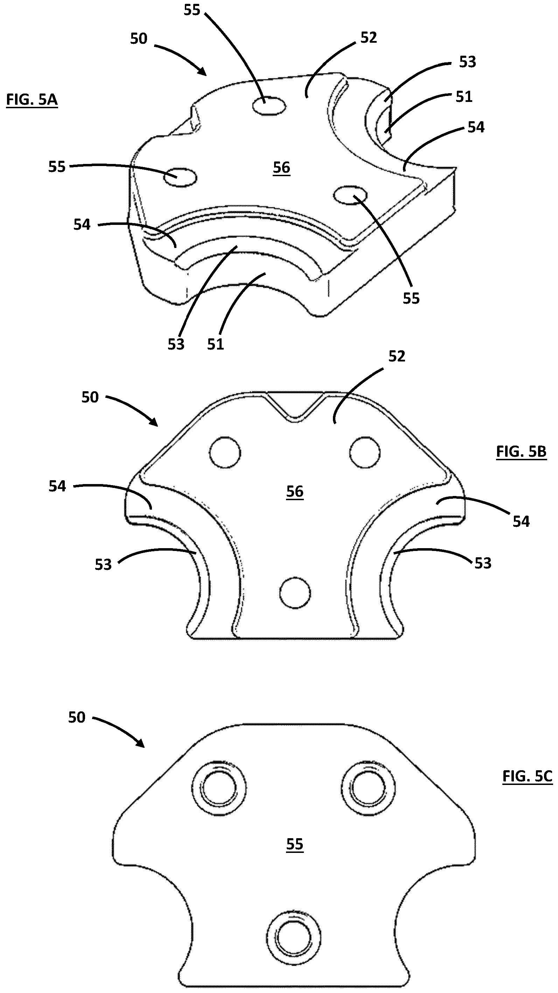

In the first embodiment, the temperature monitoring system has one thermal sensor 41 for monitoring the temperature of the two contact terminals 20 and one thermal conductive pad 50 illustrated in figures 5A-5C.

Alternatively, the temperature monitoring system may have two thermal sensors 41 for monitoring the temperatures of the two respective contact terminals 20, and one thermal conductive pad 50.

The thermal conductive pad 50 is distinct from the sealing pad 30. In other words, the thermal conductive pad 50 and the sealing pad 30 are two distinct or discrete pads or bodies. They are manufactured as two separate pieces.

The thermal conductive pad 50 is manufactured from a thermally conductive and electrically insulative material. It has a higher thermal conductivity than other parts of the electrical connector 100 including the sealing pad 30, the housing 10, etc... Furthermore, the material of the thermal conductive pad 50 may be compressible and deformable. It may have a hardness of the Shore A scale. For example, the thermal conductive pad 50 may be manufactured from a material including silicone with one or more additional substance(s) to increase its thermal conductivity (i.e., its property that determines how much heat will flow in the material) and its thermal diffusivity (i.e., its property that determines how rapidly heat will flow within the material). The thermal conductivity of the pad 50 may be greater than or equal to 1 W/mK, for example within the range between 1 and 3 W/mK. Illustrative and non-limitative examples of a material for the thermal conductive pad 50 include the products NL9330 with hardness of 30 Shore A, NL9360 with hardness of 60 Shore A, NL9371 with hardness of 71 Shore A and HTV SC1230TC with hardness of 60 Shore A manufactured by the company Momentive Performance Materials Inc. Alternatively, it may be manufactured from other thermally conductive and electrically insulative materials.

The thermal conductive pad 50 has a front face 55 and a rear face 56, respectively facing the front and the rear of the main housing 10. The thermal conductive pad 50 may be coupled to the sealing pad 50 adjacent to the at least one terminal hole 31. The front face 55 of the thermal conductive pad 50 may be pressed against the rear face 33 of the sealing pad 30, as described later.

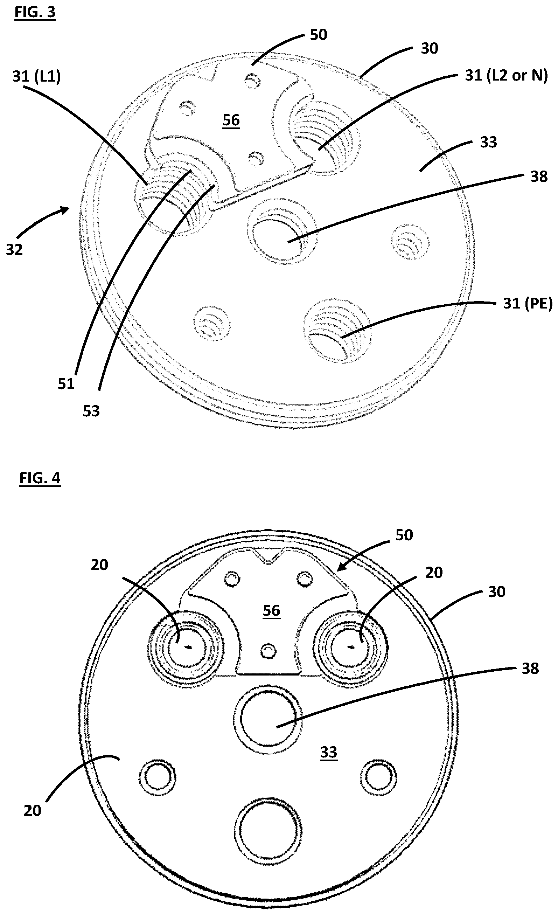

The thermal conductive pad 50 has one or more first thermal contact surface 51 and a second thermal contact surface 52, as shown in figure 3. Each first thermal contact surface 51 is in direct engagement, or direct contact, with one contact terminal 20. The second thermal contact surface 52 is in direct engagement, or in direct contact, with the thermal sensor 41. The second thermal contact surface 52 may be on the rear face 56 of the thermal conductive pad 50.

In the first embodiment, as illustrated in figures 3-4, the thermal conductive pad 50 has two first thermal contact surfaces 51 in direct engagement with the two respective terminals 20 received in two adjacent holes 31 of the sealing pad 30. The thermal conductive pad 50 is disposed between these two holes 31 and is adjacent to them.

Each first thermal contact surface 51 may have a shape complementary to the shape of a portion of the terminal 20 against which the first thermal contact surface 51 is pressed. For example, the terminals 20 are cylindrical and the first thermal contact surfaces 51 are cylindrical portions.

Optionally, the thermal conductive pad 50 may be designed to slightly protrude into the passages or paths of the terminals 20, before insertion of the terminals 30 in the respective holes 31, to cause compression of the thermal conductive pad 50 by the terminals 20 during insertion in the respective holes 31 and thus improve the mechanical connection between the terminals 20 and the thermal conductive pad 50 when the terminals 20 are inserted in the respective holes 31, as explained later.

Optionally, the thermal conductive pad 50 may have a beveled surface 53 arranged between each first thermal contact surface 51 and a respective adjacent surface 54 on the rear face 56 of the thermal conductive pad 50. The surface 54 may extend in a plane perpendicular to the first thermal contact surface 51. The beveled surfaces 53 allow to avoid damage of the thermal conductive pad 50 when the terminals 20 are inserted through the holes 31 of the sealing pad 30 from rear to front.

The thermal conductive pad 50 may be compressed between the sealing pad 30 and a printed circuit board 40 on which the thermal sensor 41 is mounted. Under the action of a compression force, the thermal conductive pad 50 is compressed and each first thermal contact surface 51 moves to the respective contact terminal 20 and the second thermal contact surface 52 deforms on the thermal sensor covering said thermal sensor 41, as schematically illustrated in figure 13.

In an embodiment, the printed circuit board 40 may be coupled to a retainer 42. In that case, the thermal conductive pad 50 may be compressed between, on one side, the sealing pad 30 and, on the other side, the printed circuit board 40 and the printed circuit board retainer 42. The rear face 56 of the thermal conductive pad 50 may include the second thermal contact surface 52 in contact with the printed circuit board 40, and the surfaces 54, adjacent to the first thermal contact surface 51 and forming recess portions or grooves in the rear face 56. The printed circuit board 40 applies a force of compression onto the second thermal surface 52 and the retainer 42 applies another force of compression onto the recess surfaces 54. The grooves or recess surfaces 54 are designed so that an equal compression is applied on the thermal conductive pad 50 by the printed circuit board 40 and by the printed circuit board retainer 42.

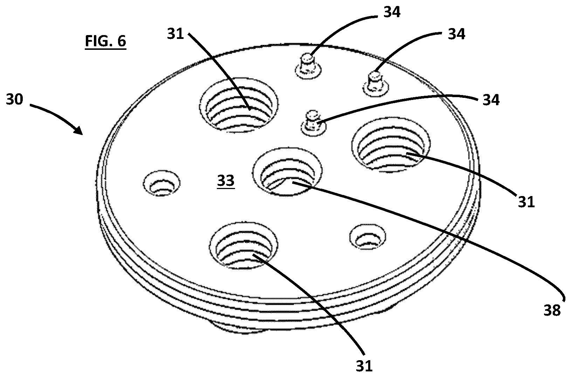

Optionally, the sealing pad 30 has first positioning elements cooperating with second positioning elements of the thermal conductive pad 50 to position the thermal conductive pad 50 on the sealing pad 30. For example, the first positioning means and the second positioning means may include M protruding elements, or protrusions, 34 and M respective holes 55 arranged to receive the M protruding elements. The protruding elements 34 may be provided on the sealing pad 30 as shown in figure 6, here on the rear face 33 of the sealing pad 30, and the respective holes 55 may be provided in the thermal conductive pad 50. Advantageously, the number M may equal to or above two, for example it is equal to three.

A second embodiment of the electrical connector 100 only differs from the first embodiment in that the numbers of contact terminals 20, thermal conductive pads 50, and thermal sensors 41 are different. For example, the electrical connector of the second embodiment may be a connector of Type 2, or a CCS Combo 2 connector or inlet.

A Type 2 or CCS2 connector may be a 1-phase, 2-phase or 3-phase connector and include the following terminals:
- for the 1-phase connector: terminals L1 and N;
- for the 2-phase connector: terminals L1, L2 and N;
- for the 3-phase connector: terminals L1, L2, L3 and N.
In addition, the connector includes a ground terminal PE.

In the second embodiment, as illustrated in Figures 5 and 6, the electrical connector is a 3-phase connector of Type 2 or CCS2 having five contact terminals comprising three phase contacts (L1, L2, L3), one neutral contact (N) and one ground contact (PE). The five terminals L1, L2, L3, N, PE are received in five respective holes 31 provided in the sealing pad 30. The temperatures of the four contact terminals L1, L2, L3 and N may be monitored with temperature sensors.

In the second embodiment, the four monitored terminals 20 L1, L2, L3 and N are arranged in two pairs of terminals 20. Each pair of terminals is associated with one thermal conductive pad 50 and one thermal sensor 41. For each pair of terminals 20, the corresponding thermal conductive pad 50 is disposed on the sealing pad 30 between the two terminal holes 31, and adjacent to them, as shown in figure 8, and has two first thermal contact surfaces 51 in direct engagement with the two contact terminals 20 respectively, and a second thermal surface in direct engagement with the associated thermal sensor 41.

It should be noted that it may not be necessary to monitor the temperature of the ground terminal.

The first and second embodiments are only illustrative examples. Any other configuration of electrical connector including P contact terminals, with P≥1, may be used. The numbers of thermal conductive pads and thermal sensors and their arrangement may be adapted to different configurations of electrical connector. For example, the temperature monitoring system may include one thermal sensor for two or more terminals, or one thermal sensor for one terminal.

The process of manufacturing the electrical connector 100 of the first embodiment will now be described with reference to figures 9-12, according to an embodiment.

The method has a step S1 of providing the main housing 10 and a step S2 of providing the sealing pad 30, as shown in figure 9A. Optionally, a peripheral seal 35 may also be provided in the step S2.

In a step S3, the sealing pad 30 is coupled to the main housing 10, as shown in figure 9A. The rear chamber 12 of the main housing 10 is open towards the rear and the sealing pad 30 is received in the sealing pad housing 14 in the rear chamber 12. As shown in figure 9A, the sealing pad 30 can be provided with an opening 38 for receiving a positioning pin 15 of the main housing 10, to facilitate the positioning of the seal 30 in the main housing 10. The rear face 33 of the sealing pad 30 is oriented towards the rear of the main housing 10. Optionally, in the step S3, the peripheral seal 35 is coupled to the main housing 10.

Then, in a step S4, the thermal conductive pad 50 is coupled to the sealing pad 50. The thermal conductive pad 50 is put on the rear face 33 of the sealing pad 30. It is disposed between the two holes 31 for receiving the two contact terminals respectively, adjacent to them. The protruding elements 34 of the sealing pad 30 are inserted into the corresponding holes 55 of the thermal conductive pad 50 to correctly position the thermal conductive pad 50 on the sealing pad 30. After coupling the thermal conductive pad 50 to the sealing pad 30, the first thermal contact surfaces 51 of the thermal conductive pad 50 slightly penetrate the respective paths or passages for the terminals 20. Alternatively, the thermal conductive pad 50 could be designed so that the first thermal contact surfaces 51 be disposed adjacent to the respective paths or passages for the terminals 20.

The process also includes a step S5 of assembling the printed circuit board 40 on which the thermal sensor 40 is mounted with the printed circuit board retainer 42, as shown in figures 10A and 10B.

Then, in a step S6, the first assembly of the main housing 10, the sealing pad 30 and the thermal conductive pad 50 is coupled to the second assembly of the printed circuit board 40 and its retainer 42. In the step S6, the printed circuit board 40 held by the retainer 42 is introduced into the rear chamber 11, and, in a step S7, the printed circuit board retainer 42 is attached to the main housing 10, for example with screws 43.

During the assembling, in the step S7, a small force of compression is exerted, for example by turning the screws 43, to press the printed circuit board 40 against the assembly of the sealing pad 30 and the thermal conductive pad 50. Under the action of this force of compression, the thermal conductive pad 50 is compressed between the sealing pad 30 and the printed circuit board 40. As a result, the first thermal contact surfaces 51 of the thermal conductive pad 50 move to the paths of the contact terminals 20 and the second thermal contact surface 52 of the thermal conductive pad 50 deforms on the thermal sensor 40 covering said thermal sensor 41. This deformation of the thermal conductive pad 50 on the thermal sensor 41 is schematically illustrated in figure 13.

In a next step S8, the contact terminals 20 are assembled with a terminal holder 44 and introduced into the terminal channels or paths of the electrical connector 100, from the rear of the main housing 10 coupled to the assembly of the retainer 42 and the printed circuit board 40. When the contact terminals 20 are introduced into their respective paths, the contact terminals 20 come into contact and direct engagement with the respective first thermal contact surfaces 51 and push them back outside the terminal paths by compressing the thermal conductive pad 50, which results in a very stable mechanical connection between the terminals 20 and the respective first thermal contact surfaces 51. The beveled surfaces 53 facilitate the introduction of the terminals 20 and allows to avoid any damage of the thermal conductive pad 50.

In operation, when a high charging current is flowing through contact terminals 20, the heat dissipated by the terminals 20 is transferred from the terminals 20 to the thermal sensor 41 through the thermal conductive pad 50 that acts as a direct thermal bridge between the terminals 20 and the thermal sensor 41.

The process of manufacturing the electrical connector according the second embodiment is analogous.

The electrical connector of the present disclosure could be included in another charging device. For example, it could be included in the vehicle charging connector of a charging cable, or in a grid socket, or in a power source.

## Claims

1. An electrical connector (100) comprising
at least one contact terminal (20);
a sealing pad (30) with at least one hole (31) for receiving the at least one contact terminal (20);
at least one thermal sensor (41) to monitor the temperature of the at least one contact terminal (20);
wherein the electrical connector (100) further comprises a thermal conductive pad (50), having a higher thermal conductivity than the sealing pad (30) and coupled to said sealing pad (30) adjacent to the at least one hole (31),
**characterized in that** said thermal conductive pad (50) includes at least one first thermal contact surface (51) in direct engagement with the at least one contact terminal (20), and a second thermal contact surface (52) in direct engagement with the at least one thermal sensor (41), to transfer heat from the at least one contact terminal (20) to the at least one thermal sensor (41).

2. The electrical connector (100) according to claim 1, wherein the thermal conductive pad (50) is compressed between the sealing pad (30) and a printed circuit board (40) on which the at least one thermal sensor (41) is mounted, a force of compression causing the at least one first thermal contact surface (51) to press against the at least one contact terminal (20)and the second thermal contact surface (52) to deform on the thermal sensor (41) covering said thermal sensor (41).

3. The electrical connector according to claim 1 or 2, wherein the thermal conductive pad (50) is designed to slightly protrude into a passage of the at least one contact terminal (20) received in the at least one hole (31) of the sealing pad (30).

4. The electrical connector (100) according to any one of claims 1 to 3, wherein the sealing pad (30) has first positioning elements cooperating with second positioning elements of the thermal conductive pad (50) to position the thermal conductive pad (50) on the sealing pad (30).

5. The electrical connector (100) according to claim 4, wherein the first positioning elements and the second positioning elements include M protruding elements (34) and M respective holes (55) arranged to receive the M protruding elements (34).

6. The electrical connector (100) according to any one of claims 1 to 5, wherein the thermal conductive pad (50) has at least one beveled surface (53) arranged between the at least one first thermal contact surface (51) and an adjacent surface (54) extending in a plane perpendicular to the first thermal contact surface (51), to thereby avoid damage of the thermal conductive pad (50) when the at least one contact terminal (20) is inserted through the at least one hole (31) of the sealing pad (30).

7. The electrical connector (100) according to any one of claims 1 to 6, including two contact terminals (20) and one thermal conductive pad (50) having two first thermal contact surfaces (51) in direct engagement with the two contact terminals (20), respectively.

8. The electrical connector (100) according to claim 7, further including a third contact terminal (20) and a ground terminal and another thermal conductive pad (50) having two first thermal contact surfaces (51) in direct engagement with the third contact terminal (20) and the ground terminal (20), respectively.

9. The electrical connector (100) according to any one of claims 1 to 8, comprising a housing (10) having a front part (11) and a rear part (12), wherein
the at least one contact terminal (20) is coupled to the housing (10) and has, at one end, a contact pin disposed at the front of the housing (10), and, at the other end, a cable connector, disposed at the rear of the housing (10);
the sealing pad (30), the at least one thermal conductive pad (50) and the at least one thermal sensor (41) are received in the housing (10), at the rear;
the sealing pad (30) being arranged to prevent water from entering the rear part (12) of the housing (10) from the front part (11) of the housing (10).

10. The electrical connector (100) according to claim 9, further including a retainer (42) for a printed circuit board (40) on which the at least one thermal sensor (41) is mounted, that is coupled to the housing (10) at the rear.

11. The electrical connector (100) according to claim 10, wherein
the thermal conductive pad (50) is compressed between, on one side, the sealing pad (30) and, on the other side, the printed circuit board (40) and the printed circuit board retainer (42), and
the thermal conductive pad (50) has a rear face including the second thermal contact surface (52) to which the printed circuit board (40) applies a compression force and a recess surface (54) to which the printed circuit board retainer (42) applies another compression force.

12. A charging inlet device for a vehicle, including the electrical connector according to any one of claims 1 to 11.

13. A vehicle including an electric battery and a charging inlet device according to claim 12 to charge the electric battery.

14. A method of manufacturing an electrical connector (100) comprising at least one contact terminal, including the steps of:
providing (S1) a sealing pad (30) with at least one hole (31) for receiving the at least one contact terminal (20);
providing at least one thermal sensor (41) to monitor the temperature of the at least one contact terminal (20);
wherein the method further comprises the steps of coupling a thermal conductive pad (50), with a higher thermal conductivity than the sealing pad (30) and having at least one first thermal contact surface (51) and a second thermal contact surface (52), to said sealing pad (30) adjacent the at least one hole (31),
**characterized in that** the method further includes the steps of:
coupling the at least one thermal sensor (41) to the assembly of the sealing pad (30) and the thermal conductive pad (50), by causing the second thermal contact surface (52) of the thermal conductive pad (50) to come into direct engagement with the at least one thermal sensor (41); and
inserting the at least one contact terminal (20) into the at least one hole (31) of the sealing pad (30), by causing the at least one terminal (20) to come into direct engagement with the at least one first thermal contact surface (51) of the thermal conductive pad (50).

15. The method according to claim 14, wherein, in the step of coupling the at least one thermal sensor (41) to the assembly of the sealing pad (30) and the thermal conductive pad (50), a printed circuit board (40) on which the at least one thermal sensor (41) is mounted is put against the assembly of the sealing pad (30) and the thermal conductive pad (50), and a force of compression is exerted to compress the thermal conductive pad (50) between the sealing pad (30) and the printed circuit board (40) and cause the at least one first thermal contact surface (51) to move to a path of the at least one contact terminal (20) and the second thermal contact surface (52) to deform on the thermal sensor (41) covering said thermal sensor (41).

## Patentansprüche

1. Ein elektrischer Steckverbinder (100), umfassend
mindestens einen Kontaktanschluss (20);
einen Dichtungsblock (30) mit mindestens einem Loch (31) zur Aufnahme des mindestens einen Kontaktanschlusses (20);
mindestens einen thermischen Sensor (41) zum Überwachen der Temperatur des mindestens einen Kontaktanschlusses (20);
wobei der elektrische Steckverbinder (100) ferner ein wärmeleitendes Pad (50) umfasst, das eine höhere Wärmeleitfähigkeit als der Dichtungsblock (30) aufweist und mit dem Dichtungsblock (30) benachbart zu dem mindestens einen Loch (31) gekoppelt ist,
**dadurch gekennzeichnet, dass**
das wärmeleitende Pad (50) mindestens eine erste thermische Kontaktfläche (51) in direktem Eingriff mit dem mindestens einen Kontaktanschluss (20) und eine zweite thermische Kontaktfläche (52) in direktem Eingriff mit dem mindestens einen thermischen Sensor (41) aufweist, um Wärme von dem mindestens einen Kontaktanschluss (20) zu dem mindestens einen thermischen Sensor (41) zu übertragen.

2. Der elektrische Steckverbinder (100) nach Anspruch 1, wobei das wärmeleitende Pad (50) zwischen dem Dichtungsblock (30) und einer Leiterplatte (40), auf der der mindestens eine thermische Sensor (41) montiert ist, zusammengedrückt wird, wobei eine Druckkraft bewirkt, dass die mindestens eine erste thermische Kontaktfläche (51) gegen den mindestens einen Kontaktanschluss (20) drückt und die zweite thermische Kontaktfläche (52) sich auf dem thermischen Sensor (41) verformt und dabei den thermischen Sensor (41) bedeckt.

3. Der elektrische Steckverbinder nach Anspruch 1 oder 2, wobei das wärmeleitende Pad (50) so ausgebildet ist, dass es geringfügig in einen Durchgang des mindestens einen Kontaktanschlusses (20), der in dem mindestens einen Loch (31) des Dichtungsblocks (30) aufgenommen ist, hineinragt.

4. Der elektrische Steckverbinder (100) nach einem der Ansprüche 1 bis 3, wobei der Dichtungsblock (30) erste Positionierungselemente aufweist, die mit zweiten Positionierungselementen des wärmeleitenden Pads (50) zusammenwirken, um das wärmeleitende Pad (50) auf dem Dichtungsblock (30) zu positionieren.

5. Der elektrische Steckverbinder (100) nach Anspruch 4, wobei die ersten Positionierungselemente und die zweiten Positionierungselemente M vorstehende Elemente (34) und M jeweilige Löcher (55) umfassen, die angeordnet sind, um die M vorstehenden Elemente (34) aufzunehmen.

6. Der elektrische Steckverbinder (100) nach einem der Ansprüche 1 bis 5, wobei das wärmeleitende Pad (50) mindestens eine abgeschrägte Fläche (53) aufweist, die zwischen der mindestens einen ersten thermischen Kontaktfläche (51) und einer angrenzenden Fläche (54), die sich in einer Ebene senkrecht zur ersten thermischen Kontaktfläche (51) erstreckt, angeordnet ist, um dadurch eine Beschädigung des wärmeleitenden Pads (50) zu vermeiden, wenn der mindestens eine Kontaktanschluss (20) durch das mindestens eine Loch (31) des Dichtungsblocks (30) eingeführt wird.

7. Der elektrische Steckverbinder (100) nach einem der Ansprüche 1 bis 6, der zwei Kontaktanschlüsse (20) und ein wärmeleitendes Pad (50) mit zwei ersten thermischen Kontaktflächen (51) umfasst, die jeweils in direktem Eingriff mit den beiden Kontaktanschlüssen (20) stehen.

8. Der elektrische Steckverbinder (100) nach Anspruch 7, der ferner einen dritten Kontaktanschluss (20) und einen Masseanschluss und ein weiteres wärmeleitendes Pad (50) mit zwei ersten thermischen Kontaktflächen (51) umfasst, die jeweils in direktem Eingriff mit dem dritten Kontaktanschluss (20) und dem Masseanschluss (20) stehen.

9. Der elektrische Steckverbinder (100) nach einem der Ansprüche 1 bis 8, umfassend ein Gehäuse (10) mit einem vorderen Teil (11) und einem hinteren Teil (12), wobei der mindestens eine Kontaktanschluss (20) mit dem Gehäuse (10) gekoppelt ist und an einem Ende einen Kontaktstift aufweist, der an der Vorderseite des Gehäuses (10) angeordnet ist, und am anderen Ende einen Kabelstecker, der an der Rückseite des Gehäuses (10) angeordnet ist;
der Dichtungsblock (30), das mindestens eine wärmeleitende Pad (50) und der mindestens eine thermische Sensor (41) im Gehäuse (10) an der Rückseite aufgenommen sind;
wobei der Dichtungsblock (30) so angeordnet ist, dass er das Eindringen von Wasser von dem vorderen Teil (11) des Gehäuses (10) in den hinteren Teil (12) des Gehäuses (10) verhindert.

10. Der elektrische Steckverbinder (100) nach Anspruch 9, ferner umfassend eine Halterung (42) für eine Leiterplatte (40), auf der der mindestens eine thermische Sensor (41) montiert ist, die an der Rückseite mit dem Gehäuse (10) gekoppelt ist.

11. Der elektrische Steckverbinder (100) nach Anspruch 10, wobei das wärmeleitende Pad (50) zwischen, auf der einen Seite, dem Dichtungsblock (30) und, auf der anderen Seite, der Leiterplatte (40) und der Leiterplattenhalterung (42) zusammengedrückt wird, und
das wärmeleitende Pad (50) eine Rückseite aufweist, die die zweite thermische Kontaktfläche (52), auf die die Leiterplatte (40) eine Druckkraft ausübt, und eine Aussparungsfläche (54), auf die die Leiterplattenhalterung (42) eine weitere Druckkraft ausübt, umfasst.

12. Eine Ladeeinlassvorrichtung für ein Fahrzeug, umfassend den elektrischen Steckverbinder nach einem der Ansprüche 1 bis 11.

13. Ein Fahrzeug, umfassend eine elektrische Batterie und eine Ladeeinlassvorrichtung nach Anspruch 12 zum Laden der elektrischen Batterie.

14. Ein Verfahren zur Herstellung eines elektrischen Steckverbinders (100), der mindestens einen Kontaktanschluss umfasst, mit den Schritten:
Bereitstellen (S1) eines Dichtungsblocks (30) mit mindestens einem Loch (31) zur Aufnahme des mindestens einen Kontaktanschlusses (20);
Bereitstellen mindestens eines thermischen Sensors (41) zum Überwachen der Temperatur des mindestens einen Kontaktanschlusses (20);
wobei das Verfahren ferner die Schritte des Koppelns eines wärmeleitenden Pads (50), mit einer höheren Wärmeleitfähigkeit als der Dichtungsblock (30) und mit mindestens einer ersten thermischen Kontaktfläche (51) und einer zweiten thermischen Kontaktfläche (52), mit dem Dichtungsblock (30) benachbart zu dem mindestens einen Loch (31) umfasst,
**dadurch gekennzeichnet, dass** das Verfahren ferner die Schritte umfasst:
Koppeln des mindestens einen thermischen Sensors (41) mit der Anordnung aus dem Dichtungsblock (30) und dem wärmeleitenden Pad (50), indem bewirkt wird, dass die zweite thermische Kontaktfläche (52) des wärmeleitenden Pads (50) in direkten Eingriff mit dem mindestens einen thermischen Sensor (41) kommt; und
Einsetzen des mindestens einen Kontaktanschlusses (20) in das mindestens eine Loch (31) des Dichtungsblocks (30), indem bewirkt wird, dass der mindestens eine Anschluss (20) in direkten Eingriff mit der mindestens einen ersten thermischen Kontaktfläche (51) des wärmeleitenden Pads (50) kommt.

15. Das Verfahren nach Anspruch 14, wobei in dem Schritt des Koppelns des mindestens einen thermischen Sensors (41) mit der Anordnung aus dem Dichtungsblock (30) und dem wärmeleitenden Pad (50) eine Leiterplatte (40), auf der der mindestens eine thermische Sensor (41) montiert ist, gegen die Anordnung aus dem Dichtungsblock (30) und dem wärmeleitenden Pad (50) gelegt wird, und eine Druckkraft ausgeübt wird, um das wärmeleitende Pad (50) zwischen dem Dichtungsblock (30) und der Leiterplatte (40) zusammenzudrücken und zu bewirken, dass sich die mindestens eine erste thermische Kontaktfläche (51) zu einem Pfad des mindestens einen Kontaktanschlusses (20) bewegt und die zweite thermische Kontaktfläche (52) sich auf dem thermischen Sensor (41) verformt und dabei den thermischen Sensor (41) bedeckt.

## Revendications

1. Un connecteur électrique (100) comprenant
au moins une borne de contact (20) ;
un tampon d'étanchéité (30) avec au moins un trou (31) pour recevoir l'au moins une borne de contact (20) ;
au moins un capteur thermique (41) pour surveiller la température de l'au moins une borne de contact (20) ;
dans lequel le connecteur électrique (100) comprend en outre un tampon thermoconducteur (50), ayant une conductivité thermique plus élevée que le tampon d'étanchéité (30) et couplé audit tampon d'étanchéité (30) de manière adjacente à l'au moins un trou (31),
**caractérisé en ce que**
ledit tampon thermoconducteur (50) inclut au moins une première surface de contact thermique (51) en prise directe avec l'au moins une borne de contact (20), et une seconde surface de contact thermique (52) en prise directe avec l'au moins un capteur thermique (41), pour transférer de la chaleur de l'au moins une borne de contact (20) à l'au moins un capteur thermique (41).

2. Le connecteur électrique (100) selon la revendication 1, dans lequel le tampon thermoconducteur (50) est comprimé entre le tampon d'étanchéité (30) et une carte de circuit imprimé (40) sur laquelle l'au moins un capteur thermique (41) est monté, une force de compression amenant l'au moins une première surface de contact thermique (51) à appuyer contre l'au moins une borne de contact (20) et la seconde surface de contact thermique (52) à se déformer sur le capteur thermique (41) en recouvrant ledit capteur thermique (41).

3. Le connecteur électrique selon la revendication 1 ou 2, dans lequel le tampon thermoconducteur (50) est conçu pour faire légèrement saillie dans un passage de l'au moins une borne de contact (20) reçue dans l'au moins un trou (31) du tampon d'étanchéité (30).

4. Le connecteur électrique (100) selon l'une quelconque des revendications 1 à 3, dans lequel le tampon d'étanchéité (30) a des premiers éléments de positionnement coopérant avec des seconds éléments de positionnement du tampon thermoconducteur (50) pour positionner le tampon thermoconducteur (50) sur le tampon d'étanchéité (30).

5. Le connecteur électrique (100) selon la revendication 4, dans lequel les premiers éléments de positionnement et les seconds éléments de positionnement incluent M éléments saillants (34) et M trous respectifs (55) agencés pour recevoir les M éléments saillants (34).

6. Le connecteur électrique (100) selon l'une quelconque des revendications 1 à 5, dans lequel le tampon thermoconducteur (50) a au moins une surface biseautée (53) agencée entre l'au moins une première surface de contact thermique (51) et une surface adjacente (54) s'étendant dans un plan perpendiculaire à la première surface de contact thermique (51), pour ainsi éviter d'endommager le tampon thermoconducteur (50) lorsque l'au moins une borne de contact (20) est insérée à travers l'au moins un trou (31) du tampon d'étanchéité (30).

7. Le connecteur électrique (100) selon l'une quelconque des revendications 1 à 6, incluant deux bornes de contact (20) et un tampon thermoconducteur (50) ayant deux premières surfaces de contact thermique (51) en prise directe avec les deux bornes de contact (20), respectivement.

8. Le connecteur électrique (100) selon la revendication 7, incluant en outre une troisième borne de contact (20) et une borne de masse et un autre tampon thermoconducteur (50) ayant deux premières surfaces de contact thermique (51) en prise directe avec la troisième borne de contact (20) et la borne de masse (20), respectivement.

9. Le connecteur électrique (100) selon l'une quelconque des revendications 1 à 8, comprenant un boîtier (10) ayant une partie avant (11) et une partie arrière (12), dans lequel l'au moins une borne de contact (20) est couplée au boîtier (10) et a, à une extrémité, une broche de contact disposée à l'avant du boîtier (10), et, à l'autre extrémité, un connecteur de câble, disposé à l'arrière du boîtier (10) ; le tampon d'étanchéité (30), l'au moins un tampon thermoconducteur (50) et l'au moins un capteur thermique (41) sont reçus dans le boîtier (10), à l'arrière ; le tampon d'étanchéité (30) étant agencé pour empêcher l'eau de pénétrer dans la partie arrière (12) du boîtier (10) depuis la partie avant (11) du boîtier (10).

10. Le connecteur électrique (100) selon la revendication 9, incluant en outre un élément de retenue (42) pour une carte de circuit imprimé (40) sur laquelle l'au moins un capteur thermique (41) est monté, qui est couplé au boîtier (10) à l'arrière.

11. Le connecteur électrique (100) selon la revendication 10, dans lequel le tampon thermoconducteur (50) est comprimé entre, d'un côté, le tampon d'étanchéité (30) et, de l'autre côté, la carte de circuit imprimé (40) et l'élément de retenue de carte de circuit imprimé (42), et le tampon thermoconducteur (50) a une face arrière incluant la seconde surface de contact thermique (52) à laquelle la carte de circuit imprimé (40) applique une force de compression et une surface d'évidement (54) à laquelle l'élément de retenue de carte de circuit imprimé (42) applique une autre force de compression.

12. Un dispositif d'entrée de charge pour un véhicule, incluant le connecteur électrique selon l'une quelconque des revendications 1 à 11.

13. Un véhicule incluant une batterie électrique et un dispositif d'entrée de charge selon la revendication 12 pour charger la batterie électrique.

14. Un procédé de fabrication d'un connecteur électrique (100) comprenant au moins une borne de contact, incluant les étapes consistant à :
fournir (S1) un tampon d'étanchéité (30) avec au moins un trou (31) pour recevoir l'au moins une borne de contact (20) ;
fournir au moins un capteur thermique (41) pour surveiller la température de l'au moins une borne de contact (20) ;
dans lequel le procédé comprend en outre les étapes consistant à
coupler un tampon thermoconducteur (50), avec une conductivité thermique plus élevée que le tampon d'étanchéité (30) et ayant au moins une première surface de contact thermique (51) et une seconde surface de contact thermique (52), audit tampon d'étanchéité (30) de manière adjacente à l'au moins un trou (31),
**caractérisé en ce que** le procédé inclut en outre les étapes consistant à :
coupler l'au moins un capteur thermique (41) à l'ensemble du tampon d'étanchéité (30) et du tampon thermoconducteur (50), en amenant la seconde surface de contact thermique (52) du tampon thermoconducteur (50) à venir en prise directe avec l'au moins un capteur thermique (41) ; et
insérer l'au moins une borne de contact (20) dans l'au moins un trou (31) du tampon d'étanchéité (30), en amenant l'au moins une borne de contact (20) à venir en prise directe avec l'au moins une première surface de contact thermique (51) du tampon thermoconducteur (50).

15. Le procédé selon la revendication 14, dans lequel, dans l'étape de couplage de l'au moins un capteur thermique (41) à l'ensemble du tampon d'étanchéité (30) et du tampon thermoconducteur (50), une carte de circuit imprimé (40) sur laquelle l'au moins un capteur thermique (41) est monté est placée contre l'ensemble du tampon d'étanchéité (30) et du tampon thermoconducteur (50), et une force de compression est exercée pour comprimer le tampon thermoconducteur (50) entre le tampon d'étanchéité (30) et la carte de circuit imprimé (40) et amener l'au moins une première surface de contact thermique (51) à se déplacer vers un trajet de l'au moins une borne de contact (20) et la seconde surface de contact thermique (52) à se déformer sur le capteur thermique (41) en recouvrant ledit capteur thermique (41).
